# FASCICULE DE BREVET EUROPEEN

(11) **EP 0 583 999 B1**
(45) Date de publication et mention de la délivrance du brevet: **23.10.1996**
(21) Numéro de dépôt: 93401906.8
(22) Date de dépôt: 22.07.1993
(51) Int. Cl.: B23K 26/08, B23K 37/04, B23K 26/00

(54) **Installation d'accostage et de soudage bord à bord en continu d'au moins deux flans de tôle au moyen d'un faisceau laser**
Vorrichtung zum kontinuierlichen Rand-an-Rand-Ausrichten und Schweissen von mit einer Laserstrahlung mindestens zwei Blechzuschnitten
Process for continuously edge to edge aligning and welding et least two sheet blanks with a laser

(30) Priorité: 14.08.1992 FR 9210055
(43) Date de publication de la demande: 23.02.1994
(73) Titulaire: SOLLAC, F-92800 Puteaux (FR)
(72) Inventeur: Peru, Gilles, F-59240 Dunkerque (FR); Sauvage, Francis, F-59240 Dunkerque (FR); Le Roy, Yvon, F-59940 Le Doulieu (FR); Sion, Charles, F-59133 Camphin-en-Carembault (FR)
(74) Mandataire: Lanceplaine, Jean-Claude

(56) Documents cités:
- EP-A- 0 087 342
- EP-A- 0 438 615
- EP-A- 0 483 569
- EP-A- 0 549 389

## Description

La présente invention a pour objet une installation d'accostage et de soudage bord à bord en continu d'au moins deux flans de tôle au moyen d'un faisceau laser.

Le soudage au moyen d'un faisceau laser de deux flans de tôle a trouvé un débouché industriel important notamment dans la production de pièces raboutées et soudées, par exemple pour l'industrie automobile.

En effet, deux flans de tôle raboutés, c'est à dire assemblés bord à bord sans recouvrement, et soudés au moyen d'un faisceau laser, conservent toute leur faculté d'emboutissabilité.

Les flans de tôle peuvent être de différentes formes géométriques et/ou de différentes épaisseurs, voire possèder des nuances d'acier différentes.

Pour réaliser un raboutage et un soudage corrects au moyen d'un faisceau laser de deux flans de tôle afin que la capacité d'emboutissage des flans de tôles soudés reste optimale, il est nécessaire que les flans de tôle à souder soient disposés avec leurs bords l'un contre l'autre sans interstices et dans le cas de flans de tôle de différentes formes, il faut que leur positionnement longitudinal l'un par rapport à l'autre soit parfait.

De plus, il est indispensable d'assurer, d'une part, un positionnement latéral parfait des flans de tôle afin que le plan de joint des deux tôles se situe dans l'axe du faisceau laser et, d'autre part, un maintien en référence longitudinal et latéral desdits flans de tôle pendant leur déplacement pour conserver le plan de joint desdites tôles dans l'axe du faisceau laser.

Dans le cas d'une installation industrielle le positionnement des flans de tôle doit être réalisé en continu.

Par conséquent, une installation industrielle doit permettre la réception des flans de tôle, le positionnement desdits flans de tôle l'un par rapport à l'autre et par rapport à l'axe du faisceau laser, et cela pendant leur déplacement vers ce faisceau laser, puis conserver cette mise en référence pendant leur déplacement et assurer le soudage des flans de tôle et leur évacuation.

Une telle installation est connue du document EP-A1-0 549 389 qui représente l'état de la technique le plus proche selon l'Article 54(3) de la CBE.

La présente invention a donc pour but de proposer une installation d'accostage et de soudage bord à bord en continu d'au moins deux flans de tôle au moyen d'un faisceau laser permettant d'obtenir une bonne qualité de soudure.

La présente invention a donc pour objet une installation d'accostage et de soudage bord à bord en continu d'au moins deux flans de tôle au moyen d'un faisceau laser, comprenant :
A) une zone de positionnement du premier flan de tôle à souder comportant :
   - un dispositif d'alimentation de ce flan de tôle sur des moyens de support et de positionnement longitudinal dudit flan de tôle selon un plan de référence horizontal, déplaçables horizontalement en direction du faisceau laser,
   - des moyens de positionnement latéral du bord à souder dudit flan de tôle dans l'axe du faisceau laser,
   - des moyens de maintien en référence longitudinale et latérale dudit flan de tôle,
   - et des moyens de maintien du bord à souder dudit flan de tôle dans l'axe du faisceau laser,
B) une zone d'accostage bord à bord des deux flans de tôle à souder comportant :
   - des moyens de support longitudinal du premier flan de tôle selon un plan de référence horizontal,
   - des moyens de maintien en référence longitudinale et latérale du premier flan de tôle,
   - des moyens de maintien du bord à souder du premier flan de tôle dans l'axe du faisceau laser,
   - un dispositif d'alimentation du second flan de tôle sur des moyens de support longitudinal de ce second flan de tôle selon un plan de référence et de positionnement du bord à souder du second flan de tôle contre le bord à souder du premier flan de tôle, déplaçables horizontalement en synchronisation avec lesdits moyens de maintien en référence du premier flan de tôle,
   - et des moyens de maintien en référence longitudinale et latérale du second flan de tôle,
C) une zone de guidage, de transfert et de soudage des deux flans de tôle comportant :
   - des moyens de support longitudinal des flans de tôle selon un plan de référence horizontal,
   - des moyens de maintien en référence longitudinale et latérale des deux flans de tôle,
   - des moyens de maintien du bord à souder du premier flan de tôle dans l'axe du faisceau laser,
   - des moyens de mise en pression latérale des bords à souder des deux flans de tôle,
   - et un ensemble de soudage par faisceau laser,
D) une zone d'évacuation des deux flans de tôle soudés comportant des moyens de support longitudinal desdits flans de tôle soudés et des moyens d'enlèvement de ces flans de tôle soudés.

Les caractéristiques et avantages de la présente invention apparaîtront au cours de la description qui va suivre, donnée uniquement à titre d'exemple, faite en référenco aux dessins annexés, dans lesquels :
- la Fig. 1 est une vue schématique de dessus d'une installation selon la présente invention,
- la Fig. 2 est une vue schématique en coupe selon la ligne 2-2 de la Fig. 1,
- la Fig. 3 est une vue en coupe selon la ligne 3-3 de la Fig. 1,
- la Fig. 4 est une vue en coupe selon la ligne 4-4 de la Fig. 1,
- la Fig. 5 est une vue en coupe selon la ligne 5-5 de la Fig.1,
- la Fig. 6 est une vue en coupe selon la ligne 6-6 de la Fig. 1,
- la Fig. 7 est une vue en coupe selon la ligne 7-7 de la Fig. 1,
- la Fig. 8 est une vue schématique en élévation de plusieurs patins d'une chaîne à patins articulés,
- la Fig. 9 est une vue de dessus de la Fig. 8.

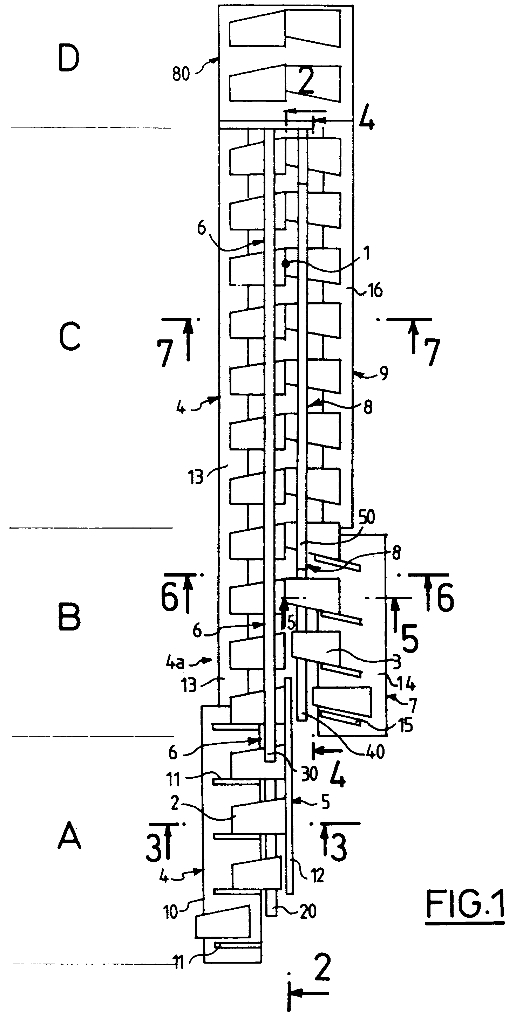

L'installation représentée schématiquement à la Fig. 1 est destinée à l'accostage et au soudage bord à bord en continu au moyen d'un faisceau laser 1 successivement de plusieurs paires de flans de tôle 2 et 3 de différentes formes géométriques et/ou de différentes épaisseurs, par exemple pour l'industrie automobile.

Les deux flans de tôle 2 et 3 de chaque paire sont placés bord à bord et défilent en continu au-dessous du faisceau laser 1 en vue de leur soudage.

Dans ce but, l'installation représentée à la Fig. 1 comporte, après découpage des flans de tôle 2 et 3 :
A) une zone A de positionnement du premier flan de tôle 2 à souder,
B) une zone B d'accostage bord à bord des deux flans de tôle 2 et 3 à souder,
C) une zone C de guidage, de transfert et de soudage des deux flans de tôle 2 et 3,
D) et une zone D d'évacuation des deux flans de tôle 2 et 3 soudés.

Dans le but de garantir une bonne qualité de soudure, le positionnement des flans de tôle 2 et 3 doit satisfaire dans la zone C de soudage, à plusieurs exigences qui sont notamment la position relative des bords à souder par rapport à l'axe du faisceau laser 1 et la pression relative sur ces bords afin de contrôler, voire réduire le jeu entre lesdits bords au cours du déplacement des flans de tôle 2 et 3.

La zone A comporte :
- un dispositif d'alimentation du premier flan de tôle 2 sur des moyens 4 de support et de positionnement longitudinal dudit flan de tôle 2 selon un plan de référence horizontal, déplaçables horizontalement en direction du faisceau laser 1,
- des moyens 5 de positionnement latéral du bord à souder dudit flan de tôle 2 dans l'axe du faisceau laser 1,
- des moyens 6 de maintien en référence longitudinale et latérale dudit flan de tôle 2,
- et des moyens 60 de maintien du bord à souder dudit flan de tôle dans l'axe du faisceau laser 1.

Dans l'exemple de réalisation représenté à la Fig. 1, les moyens 4 de support et de positionnement longitudinal du flan de tôle 2 sont formés par un tapis transporteur 10, notamment un tapis à billes, constituant une première surface de contact continue avec la face intérieure du flan de tôle 2.

Ce tapis transporteur 10 est juxtaposé à une chaîne inférieure 20 à patins articulés constituant une seconde surface de contact continue avec la face inférieure du premier flan de tôle 2 et se déplaçant longitudinalement en synchronisation avec ledit tapis transporteur 10.

La chaîne inférieure 20 à patins articulés supporte une partie du premier flan de tôle 2 située à proximité du bord à souder et le tapis transporteur 10 supporte l'autre partie dudit premier flan de tôle 2.

Le tapis transporteur 10 est muni de moyens de positionnement géométrique de chaque flan de tôle 2, disposés et adaptés selon la forme ou le profil géométrique du premier flan de tôle 2 correspondant.

Ces moyens peuvent être constitués par des butées en forme de baguettes, des ergots, des éléments en biais, des chevilles ou tout autre moyen connu pour positionner une pièce sur un tapis transporteur.

Dans l'exemple de réalisation représenté à la Fig. 1, ces moyens sont formés par des baguettes 11 fixées sur le tapis transporteur 10 et se déplaçant avec celui-ci.

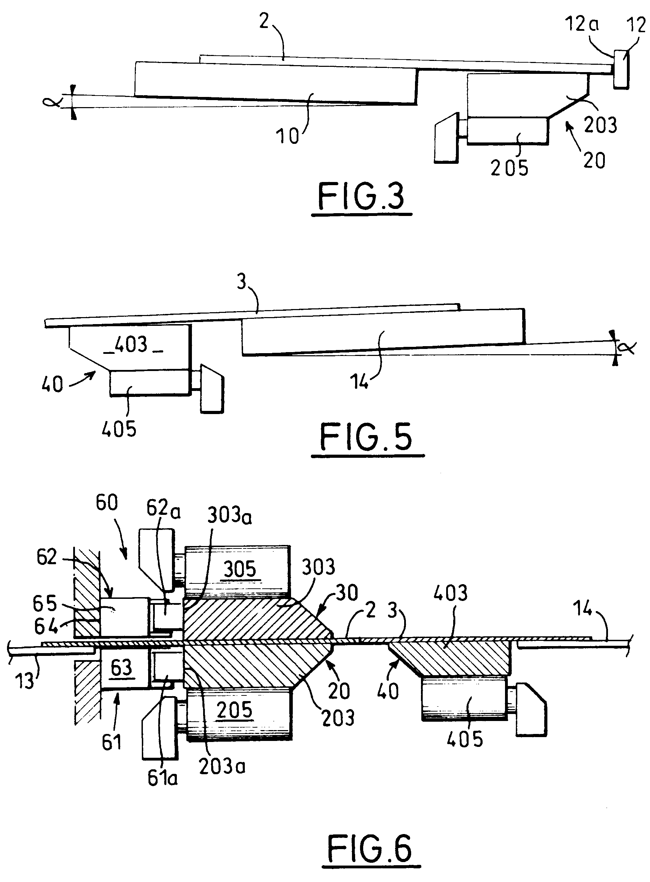

Comme représenté sur les Figs. 1 et 3, dans la zone A, les moyens de positionnement latéral du bord à souder du premier flan de tôle 2 sont formés par une butée longitudinale 12 constituant un guide, disposée verticalement pour que le plan passant par sa face latérale 12a située en regard de la chaîne inférieure 20 à patins articulés, soit confondu avec l'axe du faisceau laser 1.

Comme représenté sur la Fig. 3, le tapis transporteur 10 est incliné par rapport à l'horizontal en direction de la chaîne inférieure 20 à patins articulés d'un angle α compris entre 1 et 5°, décroissant par rapport au sens de déplacement du premier flan de tôle 2, de cet angle α jusqu'à 0°, le tapis transporteur 10 étant alors parfaitement horizontal. Ce tapis transporteur 10 est horizontal avant d'atteindre les moyens 6 de maintien en référence longitudinale et latérale du premier flan de tôle 2.

Les moyens 6 de maintien en référence longitudinale et latérale du premier flan de tôle 2 dans la zone A sont formés par l'amorce d'une chaîne supérieure 30 à patins articulés constituant une surface de contact continue avec la face supérieure dudit premier flan de tôle 2.

La chaîne supérieure 30 à patins articulés est disposée en regard de la chaîne inférieure 20 à patins articulés correspondante et est destinée à coopérer avec celle-ci pour déplacer ledit premier flan de tôle 2 par adhérence.

Ainsi, les flans de tôle 2 posés sur le tapis transporteur 10, notamment à billes, par des moyens appropriés non représentés, comme par exemple un robot manipulateur, sont déplacés longitudinalement par les baguettes 11 et glissent latéralement sur ledit tapis transporteur 10 de telle manière que le bord à souder de chaque flan de tôle 2 qui entre en contact avec la face latérale 12a de la butée 12, soit positionné dans l'axe du faisceau laser 1. A la fin de la zone A, les flans de tôle 2 sont maintenus en référence par la chaîne supérieure 30 à patins articulés.

La chaîne inférieure 20 à patins articulés et la chaîne supérieure 30 à patins articulés seront décrites plus en détails ultérieurement.

La zone B d'accostage bord à bord des deux flans de tôle 2 et 3 à souder comporte :
- des moyens 4a de support longitudinal du premier flan de tôle 2 selon un plan de référence horizontal,
- des moyens 6 de maintien en référence longitudinale et latérale du premier flan de tôle 2,
- des moyens 60 de maintien du bord à souder du premier flan de tôle 2 dans l'axe du faisceau laser 1,
- un dispositif d'alimentation du second flan de tôle 3 sur des moyens 7 de support longitudinal de ce second flan de tôle 3 selon un plan de référence et de positionnement du bord à souder du second flan de tôle 3 contre le bord à souder du premier flan de tôle 2, déplaçables horizontalement en synchronisation avec lesdits moyens 6 de maintien en référence du premier flan de tôle 2,
- et des moyens 8 de maintien en référence longitudinale et latérale du second flan de tôle 3.

Les moyens 4a de support longitudinal du premier flan de tôle 2 dans la zone B sont formés par un tapis transporteur 13 horizontal constituant une première surface de contact continue avec la face inférieure du premier flan de tôle 2.

Ce tapis transporteur 13 horizontal est juxtaposé à la chaîne inférieure 20 à patins articulés de la zone A, s'étendant sur la zone B et constituant une seconde surface de contact continue avec la face inférieure dudit premier flan de tôle 2.

Le tapis transporteur 13 horizontal est par exemple un tapis à rouleaux montés libres en rotation ou un tapis à billes ou peut être un tapis roulant se déplaçant longitudinalement en synchronisation avec la chaîne inférieure 20 à patins articulés.

La chaîne inférieure 20 à patins articulés supporte une partie du premier flan de tôle 2 située à proximité du bord à souder et le tapis transporteur 13 horizontal supporte l'autre partie dudit premier flan de tôle 2.

Dans cette zone B, les moyens 6 de maintien en référence longitudinale et latérale du premier flan de tôle 2 sont également formés par la chaîne supérieure 30 à patins articulés de la zone A, constituant une surface de contact continue avec la face supérieure dudit premier flan de tôle 2.

La chaîne supérieure 30 à patins articulés est disposée en regard de la chaîne inférieure 20 à patins articulés et est destinée à coopérer avec cette dernière pour déplacer ledit premier flan de tôle 2 par adhérence, comme dans la zone A.

Dans la zone B, les moyens 7 de support et de positionnement longitudinal du second flan de tôle 3 sont formés par un tapis transporteur 14, notamment à billes constituant une première surface de contact continue avec la face inférieure dudit second flan de tôle 3.

Ce tapis transporteur 14 est juxtaposé à une chaîne inférieure 40 à patins articulés constituant une seconde surface de contact continue avec la face inférieure du second flan de tôle 3 et se déplaçant longitudinalement en synchronisation avec ledit tapis transporteur 14.

La chaîne inférieure 40 à patins articulés supporte une partie du second flan de tôle 3 située à proximité du bord à souder et le tapis transporteur 14 supporte l'autre partie dudit second flan de tôle 3.

Le tapis transporteur 14 est muni de moyens de positionnement géométrique du second flan de tôle 3, disposés et adaptés à la forme et au profil du second flan de tôle 3.

Ces moyens peuvent être constitués par des butées en forme de baguettes, des ergots, des éléments en biais, des chevilles ou tout autre moyen connu pour positionner une pièce sur un tapis transporteur.

Dans l'exemple de réalisation représenté à la Fig. 1, ces moyens sont formés par des baguettes 15 fixées sur le tapis transporteur 14 et se déplaçant avec ce dernier.

Comme représenté à la Fig. 5, le tapis transporteur 14, notamment à billes, est incliné par rapport à l'horizontal en direction de la chaîne inférieure 40 à patins articulés d'un angle α compris entre 1 et 5° et décroissant par rapport au sens de déplacement du second flan de tôle 3, de cet angle α jusqu'à 0°C, le tapis transporteur 14 étant alors parfaitement horizonal. Ce tapis transporteur 14 est horizontal avant d'atteindre les moyens 8 de maintien en référence longitudinale et latérale du second flan de tôle 3.

Dans la zone B, les moyens 8 de maintien en référence longitudinale et latérale du second flan de tôle 3 sont formés par une chaîne supérieure 50 à patins articulés constituant une surface de contact continue avec la face supérieure dudit second flan de tôle 3.

La chaîne supérieure 50 à patins articulés est disposée en regard de la chaîne inférieure 40 à patins articulés et est destinée à coopérer avec cette dernière pour déplacer le second flan de tôle 3 par adhérence.

Ainsi, les flans de tôle 3 posés sur le tapis transporteur 14 par des moyens appropriés non représentés comme par exemple un robot manipulateur, sont déplacés par les baguettes 15 et glissent latéralement sur ledit tapis transporteur 14 de telle manière que le bord à souder de chaque second flan de tôle 3 entre en contact avec le bord à souder de chaque premier flan de tôle 2 et soit, par conséquent, positionné dans l'axe du faisceau laser 1. A la fin de la zone B, les flans de tôle 3 sont maintenus en référence pas la chaîne supérieure 50 à patins articulés.

La chaîne inférieure 40 à patins articulés et la chaîne supérieure 50 à patins articulés seront décrites plus en détails ultérieurement.

La zone C de guidage, de transfert et de soudage des deux flans de tôle 2 et 3 comporte :
- des moyens 4a de support longitudinal du premier flan de tôle 2 selon un plan de référence horizontal,
- des moyens 6 de maintien en référence longitudinale et latérale du premier flan de tôle 2, déplaçables horizontalement,
- des moyens 9 de support longitudinal du second flan de tôle 3 selon un plan de référence horizontal et déplaçables en direction du faisceau laser 1,
- des moyens 8 de maintien en référence longitudinale et latérale du second flan de tôle 3, déplaçables horizontalement,
- des moyens 60 de maintien du bord à souder du premier flan de tôle dans l'axe du faisceau laser 1,
- des moyens 70 de mise en pression latérale des bords à souder des deux flans de tôle 2 et 3,
- et le faisceau laser 1.

Cette zone C peut également comporter des moyens de contrôle du jeu entre les deux flans de tôle en amont du faisceau laser 1.

Les moyens 4a de support longitudinal du premier flan de tôle 2 dans la zone C sont constitués par le tapis transporteur horizontal 13 et la chaîne inférieure 20 à patins articulés de la zone B qui se prolongent dans la zone C.

Les moyens 6 de maintien en référence longitudinale et latérale du premier flan de tôle 2 sont formés par la chaîne supérieure 30 de la zone B qui se prolonge dans la zone C et qui est destinée à coopérer avec la chaîne inférieure 20 à patins articulés pour déplacer le premier flan de tôle 2 par adhérence.

Les moyens 9 de support longitudinal du second flan de tôle 3 de la zone C sont formés par un tapis transporteur 16 horizontal constituant une première surface de contact continue avec la face inférieure dudit second flan de tôle 3.

Ce tapis transporteur 16 horizontal est juxtaposé à la chaîne inférieure 40 à patins articulés de la zone B, s'étendant sur la zone C et constituant une seconde surface de contact continue avec la face inférieure dudit second flan de tôle 3.

Le tapis transporteur 16 horizontal est par exemple un tapis à rouleaux montés libres en rotation ou un tapis à billes ou peut être un tapis roulant se déplaçant longitudinalement en synchronisation avec la chaîne inférieure 40 à patins articulés.

La chaîne inférieure 40 à patins articulés supporte une partie du second flan de tôle 3 située à proximité du bord à souder et le tapis transporteur 16 supporte l'autre partie du second flan de tôle 3.

Les tapis transporteurs 10, 14 et les chaînes 20, 30, 40, 50 à patins articulés se déplacent longitudinalement en synchronisation les uns avec les autres avec éventuellement les tapis transporteurs 13 et 16 dans le cas où ils sont constitués par des tapis roulants.

Par ailleurs, les tapis transporteurs 10 et 13 et les chaînes 20 et 30 coopérant avec le premier flan de tôle 2, et les tapis transporteurs 14 et 16 et les chaînes 40 et 50 coopérant avec le second flan de tôle 3 sont situés de part et d'autre du plan de joint des flans de tôle 2 et 3.

Pendant son transfert vers la zone B, le premier flan de tôle 2 repose d'abord sur le tapis transporteur 10, puis est pressé entre la chaîne inférieure 20 à patins articulés et l'amorce de la chaîne supérieure 30 à patins articulés.

Il en est de même pour le transfert vers la zone C du second flan de tôle 3 qui repose d'abord sur le tapis transporteur 14 et sur la chaîne inférieure 40 à patins articulés, puis est pressé entre ladite chaîne inférieure 40 et l'amorce de la chaîne supérieure 50 à patins articulés.

Pour assurer le positionnement relatif des deux flans de tôle 2 et 3 dans la direction du faisceau laser 1, les moyens 4 de support et de positionnement du premier flan de tôle 2 et les moyens 7 de support et de positionnement du second flan de tôle 3 peuvent être désynchronisés pour qu'ils avancent à des vitesses différentes jusqu'à ce que les deux tapis transporteurs 10 et 14 soient en position relative correcte l'un par rapport à l'autre afin que les flans de tôle 2 et 3 arrivent parfaitement positionnée dans la zone C de l'installation.

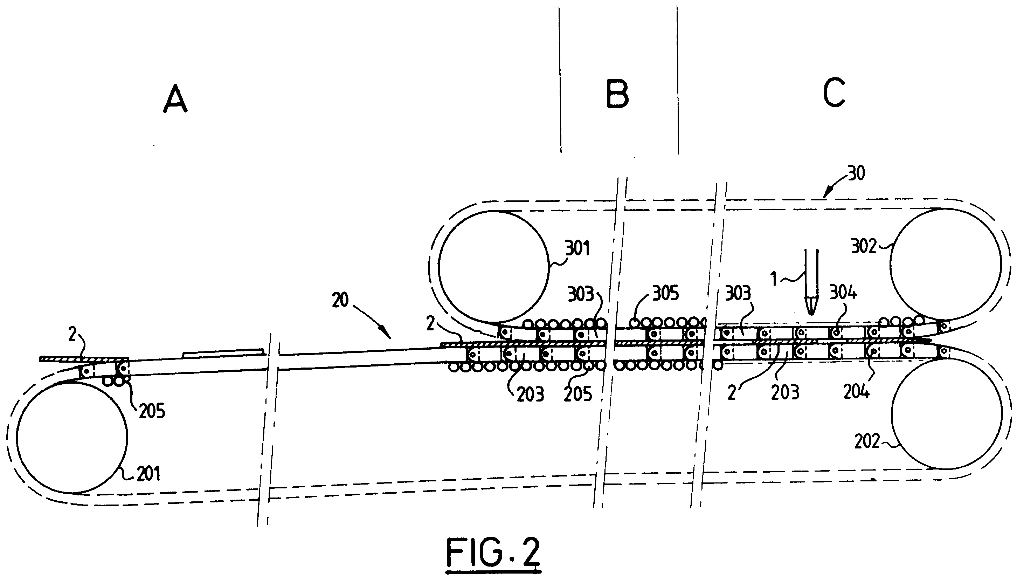

En se reportant maintenant aux Figs 2, 4 et 6 à 9, on va décrire plus en détails les chaînes à patins articulés.

Comme représenté sur les Figs. 2, 6 et 7, la chaîne inférieure 20 à patins articulés qui constitue une surface de contact continue avec la face inférieure du flan de tôle 2 forme une boucle dans un plan perpendiculaire aux flans de tôle 2 et 3.

La chaîne inférieure 20 est portée par une paire de roues 201 et 202 disposées chacune à une extrémité de ladite boucle.

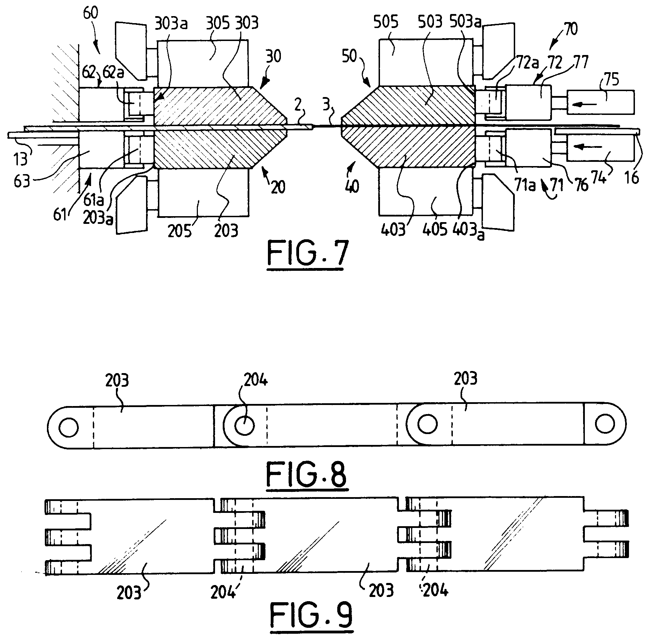

La chaîne inférieure 20 comprend des patins 203 de forme générale parallélépipèdique et articulée entre eux au moyen de tiges 204, comme représenté sur les Figs. 8 et 9.

La chaîne inférieure 20 comporte également des rouleaux 205 d'appui, libres en rotation et destinés à coopérer avec la face des patins 203 opposée à celle en contact avec le second flan de tôle 2.

Ces rouleaux 205 cylindriques à génératrice droite, sont relativement rapprochés les uns des autres, l'axe de rotation desdits rouleaux étant perpendiculaire au sens de déplacement de la chaîne inférieure 20 et horizontal.

Ces rouleaux 205 supportent la chaîne inférieure 20 de telle sorte que la surface de ladite chaîne 20 en contact avec la face inférieure du second flan de tôle 2 détermine un plan de référence horizontal pour le positionnement dudit flan.

Au moins trois rouleaux 205 sont en contact avec chaque patin 203.

L'entraînement de la chaîne inférieure 20 est réalisé par exemple par un système motoréducteur non représenté et relié à une des roues 201 ou 202.

La chaîne supérieure 30 à patins articulés qui constitue une surface de contact continue avec la face supérieure du premier flan de tôle 2 forme une boucle dans un plan perpendiculaire aux flans de tôle 2 et 3.

La chaîne supérieure 30 est portée par une paire de roues 301 et 302 disposée chacune à une extrémité de ladite boucle.

La chaîne supérieure 30 est constituée de patins 303 de forme générale parallélépipèdique et articulés entre eux au moyen de tiges 304.

Cette chaîne supérieure 30 comporte des rouleaux d'appui 305, libres en rotation et destinés à coopérer avec la face des patins 303 opposée à celle en contact avec le premier flan de tôle 2.

Ces rouleaux 305 cylindriques à génératrice de droite sont relativement rapprochés les uns des autres, l'axe de rotation desdits rouleaux étant perpendiculaire au sens de déplacement de la chaîne supérieure 30 et horizontal.

L'entraînement de la chaîne supérieure 30 est réalisé par exemple par un système motoréducteur non représenté et relié à une des roues 301 ou 302.

Les rouleaux 305 sont positionnés de telle façon qu'ils exercent une pression superficielle verticale sur les patins 303 de la chaîne supérieure 30 de façon à pincer le premier flan de tôle 2 entre les patins 203 et 303.

Au moins trois rouleaux 305 sont en contact avec chaque patin 303 en des endroits régulièrement espacés, répartissant l'effort de compression sur le premier flan de tôle 2 afin de maintenir une bonne planéité des patins 303 et de permettre une répartition de l'effort par plusieurs contacts linéaires.

Comme représenté sur les Figs. 4, 6 et 7, la chaîne inférieure 40 à patins articulés qui constitue une surface de contact continue avec la face inférieure du second flan de tôle 3 forme une boucle dans un plan perpendiculaire aux flans de tôle 2 et 3.

La chaîne inférieure 40 à patins articulés est portée par une paire de roues 401 et 402 disposée chacune à une extrémité de la boucle.

La chaîne inférieure 40 comprend des patins 403 de forme générale parallélépipèdique et articulés entre eux au moyen de tiges 404.

La chaîne inférieure 40 comporte des rouleaux d'appui 405, libres en rotation et destinés à coopérer avec la face des patins 403 opposée à celle en contact avec le second flan de tôle 3.

Les rouleaux 405 cylindriques, à génératrice droite, sont relativement rapprochés les uns des autres, l'axe de rotation desdits rouleaux étant perpendiculaire en sens de déplacement de la chaîne inférieure 40 et horizontal.

Ces rouleaux 405 supportent la chaîne inférieure 40 de telle sorte que la surface de ladite chaîne inférieure 40 en contact avec la face inférieure du second flan de tôle 3 détermine un plan de référence horizontal pour le positionnement dudit flan de tôle.

Au moins trois rouleaux 405 sont en contact avec chaque patin 403.

L'entraînement de la chaîne inférieure 40 est réalisé par exemple par un système motoréducteur non représenté et relié à l'une des roues 401 ou 402.

La chaîne supérieure 50 à patins articulés qui constitue une surface de contact continue avec la face supérieure du second flan de tôle 3 forme une boucle dans un plan perpendiculaire aux flans de tôle 2 et 3.

Cette chaîne supérieure 50 est portée par une paire de roues 501 et 502 disposée chacune à une extrémité de la boucle.

La chaîne supérieure 50 comprend des patins 503 de forme générale parallélépipèdique et articulés entre eux au moyen de tiges 504.

La chaîne supérieure 50 comporte des rouleaux d'appui 505, libres en rotation et destinés à coopérer avec la face des patins 503 opposée à celle en contact avec le second flan de tôle 3.

Ces rouleaux 505 à génératrice droite sont relativement rapprochés les uns des autres, l'axe de rotation desdits rouleaux étant perpendiculaire au sens de déplacement de la chaîne supérieure 50 et horizontal.

L'entraînement de la chaîne supérieure 50 est réalisé par exemple par un système motoréducteur non représenté et relié à l'une des roues 501 et 502.

Les rouleaux d'appui 505 sont positionnés de telle façon qu'ils exercent une pression superficielle verticale sur les patins 503 de la chaîne supérieure 50 de façon à presser le second flan de tôle 3 entre les patins 403 et 503.

Au moins trois rouleaux 505 sont en contact avec chaque patin 503 en des endroits régulièrement espacés répartissant l'effort de compression sur le second flan de tôle 3 afin de maintenir une bonne planéité des patins 503 et de permettre une répartition de l'effort sur plusieurs contacts linéaires.

Chaque flan de tôle 2 ou 3, après avoir été progressivement pincé entre les patins respectivement 203 et 303, 403 et 503, dans les zones A et B de l'installation, sont guidés et entraînés par adhérence dans la zone C entre ces patins grâce à la pression superficielle exercée par les rouleaux, respectivement 205 et 305, 405 et 505.

Les chaînes 20, 30, 40 et 50 à patins articulés sont entraînées en synchronisation les unes avec les autres ce qui permet d'entraîner les flans de tôle 2 et 3 dans la direction du soudage, sans aucun glissement possible desdits flans de tôle par rapport aux patins sous pression.

La fin de la zone A et les zones B et C sont pour pourvues de moyens 60 de maintien du bord à souder du premier flan de tôle 2 dans l'axe du faisceau laser 1.

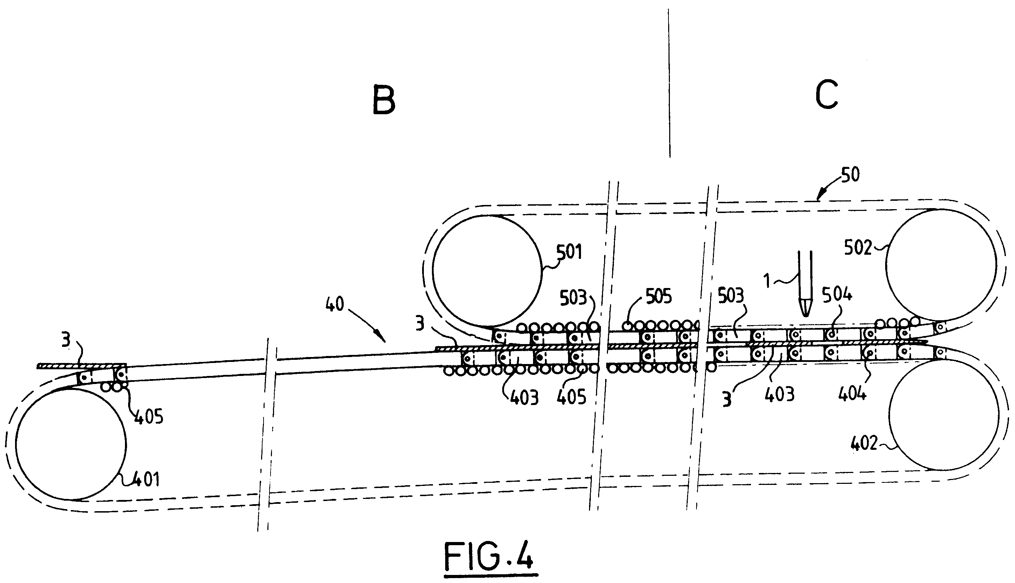

Comme représenté sur les Figs. 6 et 7, ces moyens 60 de maintien du bord à souder du premier flan de tôle 2 sont formés par deux chemins de guidage 61 et 62 latéral, parallèles et disposés de part et d'autre du plan horizontal de déplacement des flans de tôle 2 et 3.

Le chemin de guidage 61 est formé par des galets 61a à axe vertical et libres en rotation, lesdits galets 61a étant en appui sur la surface latérale 203a des patins 203 de la chaîne inférieure 20 et montés sur un support 63 fixé sur une surface de référence verticale 64.

Le chemin de guidage 62 est également formé par des galets 62a à axe vertical et libres en rotation, lesdits galets 62a étant en appui sur la surface latérale 303a des patins 303 de la chaîne supérieure 30 et montés sur un support 65 fixé sur la surface de référence verticale 64.

Selon une variante, les galets 61a et 62a peuvent être montés directement sur les patins respectivement 203 et 303 et s'appuyés sur la surface de référence verticale 64.

Cette disposition permet, grâce aux chemins de guidage 61 et 62 et à la surface de référence 64, de maintenir le bord à souder du premier flan de tôle 2, préalablement positionné dans la zone A de l'installation, dans l'axe du faisceau laser 1.

La fin de la zone B et la zone C sont pourvues de moyens 70 de mise en pression latérale des bords à souder des deux flans de tôle 2 et 3.

Comme représenté sur la Fig. 7, ces moyens 70 de mise en pression latérale des bords à souder des deux flans de tôle 2 et 3 sont formés par deux chemins de guidage 71 et 72 latéral, parallèles et disposés de part et d'autre du plan horizontal du déplacement dudit flan de tôle.

Le chemin de guidage 71 coopère, d'une part, avec les patins 403 de la chaîne inférieure 40 et, d'autre part, avec au moins un organe de poussée 74 selon une direction perpendiculaire au plan de joint des flans de tôle 2 et 3.

Le chemin de guidage 72 coopère, d'une part, avec les patins 503 de la chaîne supérieure 50 et, d'autre part, avec au moins un organe de poussée 75 selon une direction perpendiculaire au plan de joint des flans de tôle 2 et 3.

Le chemin de guidage 71 est formé par des galets 71a à axe vertical et libres en rotation, lesdits galets 71a étant en appui sur la surface latérale 403a des patins 403 de la chaîne inférieure 40 et montés sur un support 76 relié à l'organe de poussée 74.

Le chemin de guidage 72 est formé par des galets 72a à axe vertical et libres en rotation, lesdits galets 72a étant en appui sur la surface latérale 503a des patins 503 de la chaîne supérieure 50 et montés sur un support 77 relié à l'organe de poussée 75.

Selon une variante, les galets 71a et 72a peuvent être montés directement sur les patins respectivement 403 et 503 et peuvent être en appui sur un guide relié auxdits organes de poussée 74 et 75.

Les organes de poussée 74 et 75 sont constitués par exemple par des vérins.

Selon une variante, les moyens de maintien en référence longitudinale et latérale des flans de tôles 2 et 3 peuvent être formés par une bande continue en contact avec la face supérieure du flan de tôle 2 ou 3 correspondant et par des rouleaux libres en rotation, d'appui de la bande continue sur ladite face supérieure.

Enfin, la zone D d'évacuation des deux flans de tôle soudés comporte des moyens 80 de support desdits flans de tôle soudés et des moyens, non représentés, d'enlèvement de ces flans de tôle soudés.

Ces moyens 80 de support peuvent être constitués par une table de transfert, par exemple par une table à rouleaux ou à billes, et les moyens d'enlèvement peuvent être constitués par un robot manipulateur.

Ces moyens 80 de support des flans de tôle soudés peuvent également être constitués par les tapis transporteurs 13 et 16 et les chaînes inférieures 20 et 40 de la zone précédente C qui se prolongent sur la zone D.

La zone D peut également comporter des moyens de contrôle de la soudure, de brossage et de huilage de cette soudure.

## Revendications

1. Installation d'accostage et de soudage bord à bord en continu d'au moins deux flans de tôle (2, 3) au moyen d'un faisceau laser (1), comprenant :
A) une zone A de positionnement du premier flan de tôle (2) à souder comportant :
- un dispositif d'alimentation de ce flan de tôle (2) sur des moyens (4) de support et de positionnement longitudinal dudit flan de tôle (2) selon un plan de référence horizontal, déplaçables horizontalement en direction du faisceau laser (1),
- des moyens (5) de positionnement latéral du bord à souder dudit flan de tôle (2) dans l'axe du faisceau laser (1),
- des moyens (6) de maintien en référence longitudinale et latérale dudit flan de tôle (2),
- et des moyens (60) de maintien du bord à souder dudit flan de tôle (2) dans l'axe du faisceau laser (1),
B) une zone B d'accostage bord à bord des deux flans de tôle (2, 3) à souder comportant :
- des moyens (4a) de support longitudinal du premier flan de tôle (2) selon un plan de référence horizontal,
- des moyens (6) de maintien en référence longitudinale et latérale du premier flan de tôle (2),
- des moyens (60) de maintien du bord à souder du premier flan de tôle (2) dans l'axe du faisceau laser (1),
- un dispositif d'alimentation du second flan de tôle (3) sur des moyens (7) de support longitudinal de ce second flan de tôle (3) selon un plan de référence et de positionnement du bord à souder dudit second flan de tôle (3) contre le bord à souder du premier flan de tôle (2), déplaçables horizontalement en synchronisation avec lesdits moyens (6) de maintien en référence du premier flan de tôle (2),
- et des moyens (8) de maintien en référence longitudinale et latérale du second flan de tôle (3),
C) une zone C de guidage, de transfert et de soudage des deux flans de tôle (2,3) comportant :
- des moyens (4a, 9) de support longitudinal des flans de tôle (2, 3) selon un plan de référence horizontal,
- des moyens (6, 8) de maintien en référence longitudinale et latérale des deux flans de tôle (2, 3), déplaçables horizontalement,
- des moyens (60) de maintien du bord à souder du premier flan de tôle (2) dans l'axe du faisceau laser (1),
- des moyens (70) de mise en pression latérale des bords à souder des deux flans de tôle (2, 3),
- et un ensemble de soudage par faisceau laser (1),
D) une zone D d'évacuation des deux flans de tôle (2, 3) soudés comportant des moyens (80) de support longitudinal desdits flans de tôle soudés et des moyens d'enlèvement de ces flans de tôle soudés.

2. Installation selon la revendication 1, caractérisée en ce que les moyens (4) de support et de positionnement longitudinal du premier flan de tôle (2) sont formés par un tapis transporteur (10) constituant une première surface de contact continue avec la face inférieure du premier flan de tôle (2), juxtaposé à une chaîne inférieure (20) à patins articulés constituant une seconde surface de contact continue avec la face inférieure dudit premier flan de tôle (2) et se déplaçant longitudinalement en synchronisation avec le tapis transporteur (10).

3. Installation selon la revendication 2, caractérisée en ce que la chaîne inférieure (20) à patins articulés supporte une partie du premier flan de tôle (2) située à proximité du bord à souder et le tapis transporteur (10) supporte l'autre partie du premier flan de tôle (2).

4. Installation selon les revendications 1 et 2, caractérisée en ce que les moyens (5) de positionnement latéral du bord à souder du premier flan de tôle (2) sont formés par une butée longitudinale (12) constituant un guide, disposée verticalement pour que le plan passant par sa face latérale (12a) située en regard de la chaîne inférieure (20) à patins articulés, soit confondu avec l'axe du faisceau laser (1).

5. Installation selon la revendication 1, caractérisée en ce que les moyens (7) de support et de positionnement longitudinal du second flan de tôle (3) sont formés par un tapis transporteur (14) constituant une première surface de contact continue avec la face inférieure dudit flan de tôle (3), juxtaposé à une chaîne inférieure (40) à patins articulés constituant une seconde surface de contact continue avec la face inférieure dudit second flan de tôle (3) et se déplaçant longitudinalement en synchronisation avec ledit tapis transporteur (14).

6. Installation selon la revendication 5, caractérisée en ce que la chaîne inférieure (40) à patins articulés supporte une partie du second flan de tôle (3) située à proximité du bord à souder et le tapis transporteur (14) supporte l'autre partie dudit second flan de tôle (3).

7. Installation selon les revendications 2 et 5, caractérisée en ce que les tapis transporteurs (10, 14) sont munis de moyens (11, 15) de positionnement géométrique de chaque flan de tôle (2, 3), adaptés à la forme dudit flan de tôle correspondant.

8. Installation selon la revendication 7, caractérisée en ce que les moyens de positionnement géométrique de chaque flan de tôle (2, 3) sont constitués par des butées (11, 15) en forme de baguettes, des ergots ou des chevilles.

9. Installation selon les revendications 2 et 5, caractérisée en ce que les tapis transporteurs (10, 14) sont inclinés par rapport à l'horizontal en direction de la chaîne inférieure (20, 40) à patins articulés correspondante d'un angle α compris entre 1 et 5° décroissant par rapport au sens de déplacement des flans de tôle (2, 3), de cet angle α jusqu'à 0°, lesdits tapis transporteurs (10, 14) étant horizontaux avant d'atteindre les moyens (6, 8) de maintien en référence des flans de tôle (2, 3).

10. Installation selon les revendications 2 et 5, caractérisée en ce que les tapis transporteurs (10 et 14) sont des tapis à billes.

11. Installation selon les revendications 1 et 2, caractérisée en ce que les moyens (4a) de support longitudinal du premier flan de tôle (2) dans la seconde zone B et la troisième zone C de ladite installation sont formés par un tapis transporteur (13) horizontal constituant une première surface de contact continue avec la face inférieure du premier plan de tôle (2), juxtaposé à la chaîne inférieure (20) à patins articulés de la première zone A s'étendant sur la seconde zone B et la troisième zone C et constituant une seconde surface de contact continue avec la face inférieure dudit premier flan de tôle (2).

12. Installation selon les revendications 1 et 5, caractérisée en ce que les moyens (9) de support longitudinal du second flan de tôle (3) dans la troisième zone C de ladite installation sont formés par un tapis transporteur (16) horizontal constituant une première face de contact continue avec la face inférieure du second flan de tôle (3), juxtaposé à la chaîne inférieure (40) à patins articulés de la seconde zone B, s'étendant sur ladite troisième zone C et constituant une seconde surface de contact continue avec la face inférieure dudit second flan de tôle (3).

13. Installation selon les revendications 1 et 2, caractérisée en ce que les moyens (6) de maintien en référence longitudinale et latérale du premier flan de tôle (2) sont formés par une chaîne supérieure (30) à patins articulés constituant une surface de contact continue avec la face supérieure du premier flan de tôle (2), ladite chaîne supérieure (30) à patins articulés étant disposée en regard de la chaîne inférieure (20) à patins articulés correspondante et destinée à coopérer avec cette dernière pour déplacer le premier flan de tôle (2) par adhérence.

14. Installation selon la revendication 13, caractérisée en ce que la chaîne supérieure (30) à patins articulés se déplace longitudinalement en synchronisation avec la chaîne inférieure (20) à patins articulés.

15. Installation selon les revendications 1 et 5, caractérisée en ce que les moyens (8) de maintien en référence longitudinale et latérale du second flan de tôle (3) sont formés par une chaîne supérieure (50) à patins articulés constituant une surface de contact continue avec la face supérieure dudit second flan de tôle (3), ladite chaîne supérieure (50) à patins articulés étant disposée en regard de la chaîne inférieure (40) à patins articulés correspondante et destinée à coopérer avec cette dernière pour déplacer ledit second flan de tôle (3) par adhérence.

16. Installation selon la revendication 14, caractérisée en ce que la chaîne supérieure (50) à patins articulés se déplace longitudinalement en synchronisation avec la chaîne inférieure (40) à patins articulés.

17. Installation selon l'une quelconque des revendications 1, 2, 11 ou 13, caractérisée en ce que les moyens (60) de maintien du bord à souder du premier flan de tôle (2) sont formés par deux chemins de guidage (61, 62) latéral, parallèles et disposés de part et d'autre du plan horizontal de déplacement des flans de tôles (2, 3), chaque chemin de guidage (61, 62) coopérant, d'une part, avec une surface latérale (203a, 303a) des patins (203, 303) des chaînes (20, 30) à patins articulés et, d'autre part, avec une surface de référence verticale (64).

18. Installation selon l'une quelconque des revendications 1, 5, 12 ou 15, caractérisée en ce que les moyens (70) de mise en pression latérale des bords à souder des deux flans de tôle (2, 3) sont formés par deux chemins de guidage (71, 72) latéral, parallèles et disposés de part et d'autre du plan horizontal de déplacement des flans de tôle (2, 3), chaque chemin de guidage (71, 72) coopérant, d'une part, avec une surface latérale (403a, 503a) des patins (403, 503) des chaînes (40, 50) à patins articulés et, d'autre part, avec au moins un organe de poussée (74, 75) selon une direction perpendiculaire au plan de joint des flans de tôle (2, 3).

19. Installation selon l'une quelconque des revendications 1, 2 ou 5, caractérisée en ce que les moyens (80) de support longitudinal des flans de tôle (2, 3) à souder sont formés par les tapis transporteurs (13, 16) et les chaînes inférieures (20, 40) à patins articulés de la zone C de ladite installation.

20. Installation selon l'une quelconque des revendications précédentes, caractérisée en ce que les chaînes (20, 30, 40, 50) à patins articulés comportent des rouleaux d'appui (205, 305, 405, 505) libres en rotation et destinés à coopérer avec la face des patins (203, 303, 403, 503) opposée à celle en contact avec les flans de tôle (2, 3), l'axe de rotation desdits rouleaux étant perpendiculaire au sens de déplacement desdites chaînes à patins articulés et horizontal.

21. Installation selon l'une quelconque des revendications précédentes, caractérisée en ce que les tapis transporteurs (10, 13, 14, 16) et les chaînes (20, 30, 40, 50) à patins articulés se déplacent longitudinalement en synchronisation les uns avec les autres.

22. Installation selon l'une quelconque des revendications précédentes, caractérisée en ce que les tapis transporteurs (10, 13) et les chaînes (20, 30) à patins articulés coopérant avec le premier flan de tôle (2) et les tapis transporteurs (14, 16) et les chaînes (40, 50) à patins articulés coopérant avec le second flan de tôle (3) sont disposés de part et d'autre du plan de joint des flans de tôle (2, 3).

## Claims

1. Installation for the engagement and edge to edge welding in continuous manner of at least two sheet metal blanks (2, 3) by means of a laser beam (1) comprising:
A) a positioning zone A for the first sheet blank (2) to be welded having:
- a supply device for said sheet blank (2) on means (4) for supporting and longitudinally positioning said sheet blank (2) along a horizontal reference plane and horizontally displaceable in the direction of the laser beam (1),
- means (5) for the lateral positioning of the edge to be welded of said sheet blank (2) in the axis of the laser beam (1),
- means (6) for maintaining in longitudinal and lateral reference said sheet blank (2),
- and means (60) for maintaining the edge to be welded of said sheet blank (2) in the axis of the laser beam (1),
B) a zone B for the edge to edge engagement of the two sheet blanks (2, 3) to be welded having:
- means (4a) for the longitudinal support of the first sheet blank (2) in accordance with a horizontal reference plane,
- means (6) for maintaining in longitudinal and lateral reference the first sheet blank (2),
- means (60) for maintaining the edge to be welded of the first sheet blank (2) in the axis of the laser beam (1),
- a device for the supply of the second sheet blank (3) to means (7) for longitudinally supporting said second sheet blank (3) in accordance with a reference plane and the positioning of the edge to be welded of the second sheet blank (3) against the edge to be welded of the first sheet blank (2), which are horizontally displaceable in synchronization with said means (6) for maintaining in reference the first sheet blank (2),
- and means (8) for maintaining in longitudinal and lateral reference the second sheet blank (3),
C) a zone C for guiding, transferring and welding the two sheet blanks (2, 3) having :
- means (4a, 9) for longitudinally supporting the sheet blanks (2, 3) in accordance with a horizontal reference plane,
- means (6, 8) for maintaining in longitudinal and lateral reference the two sheet blanks (2, 3),
- means (60) for maintaining the edge to be welded of the first sheet blank (2) in the axis of the laser beam (1),
- means (70) for laterally pressurizing the edges to be welded of the two sheet blanks (2, 3) and
- a laser beam (1) welding means,
D) a discharge zone D for the two welded sheet blanks (2, 3) having means (80) for longitudinally supporting the welded sheet blanks and means for removing said welded sheet blanks.

2. Installation according to claim 1, characterized in that the means (4) for the support and longitudinal positioning of the first sheet blank (2) are formed by a conveyor belt (10) constituting a first continuous contact surface with the lower face of the first sheet blank (2), juxtaposed with a lower chain (20) having articulated pads constituting a second continuous contact surface with the lower face of said first blank (2) and moving longitudinally in synchronization with the conveyor belt (10).

3. Installation according to claim 2, characterized in that the lower chain (20) having articulated pads supports one part of the first sheet blank (2) located in the vicinity of the edge to be welded and the conveyor belt (10) supports the other part of the first blank (2).

4. Installation according to claims 1 and 2, characterized in that the means (5) for the lateral positioning of the edge to be welded of the first sheet blank (2) are formed by a longitudinal abutment (12) constituting a guide and positioned vertically so that the plane passing through its lateral surface (12a) facing the lower chain (20) with articulate pads coincides with the axis of the laser beam (1).

5. Installation according to claim 1, characterized in that the means (7) for supporting and longitudinally positioning the second sheet blank (3) are formed by a conveyor belt (14) constituting a first continuous contact surface with the lower face of the blank (3), juxtaposed with a lower chain (40) having articulated pads constituting a second continuous contact surface with the lower face of the blank (3) and moving longitudinally in synchronization with said conveyor belt (14).

6. Installation according to claim 5, characterized in that the lower chain (40) having articulated pads supports one part of the second sheet blank (3) located in the vicinity of the edge to be welded and the conveyor belt (14) supports the other part of said blank (3).

7. Installation according to claims 2 and 5, characterized in that the conveyor belts (10, 14) are provided with means (11, 15) for geometrically positioning each sheet blank (2, 3) adapted to the shape of the corresponding blank.

8. Installation according to claim 7, characterized in that the geometrical positioning means of each sheet blank (2, 3) are constituted by abutments (11, 15) in the form of rods, lugs or pins.

9. Installation according to claims 2 and 5, characterized in that the conveyor belts (10, 14) are inclined with respect to the horizontal in the direction of the lower chain (20, 40) having articulated pads by an angle α between 1 and 5° decreasing with respect to the displacement direction of blanks (2, 3) to 0°, said conveyor belts (10, 14) being horizontal before reaching the means (6) for maintaining in reference the blanks (2, 3).

10. Installation according to claims 2 and 5, characterized in that the conveyor belts (10, 14) are ball belts.

11. Installation according to claims 1 and 2, characterized in that the means (4a) for longitudinally supporting the first sheet blank (2) in the second zone B and the third zone C of said installation are formed by a horizontal conveyor belt (13) constituting a first continuous contact surface with the lower face of the first sheet blank (2), juxtaposed with the lower chain (20) having articulated pads of the first zone A extending onto zone B and the third zone C and constituting a second continuous contact surface with the lower face of the first blank (2).

12. Installation according to claims 1 and 5, characterized in that the means (9) for longitudinally supporting the second sheet blank (3) in the third zone C of said installation are formed by a horizontal conveyor belt (16) constituting a first continuous contact face with the lower face of the second sheet blank (3), juxtaposed with the lower chain (40) having articulated pads of the second zone B, extending onto the third zone C and forming a second continuous contact surface with the lower face of said second blank (3).

13. Installation according to claims 1 and 2, characterized in that the means (6) for maintaining in longitudinal and lateral reference the first sheet blank (2) are formed by an upper chain (30) having articulated pads constituting a continuous contact surface with the upper face of the first blank (2), said upper chain (30) having articulated pads being positioned facing the lower chain (20) having articulated pads and cooperates with the latter to move the first blank (2) by adhesion.

14. Installation according to claim 13, characterized in that the upper chain (30) having articulated pads is longitudinally displaced in synchronization with the lower chain (20) having articulated pads.

15. Installation according to claims 1 and 5, characterized in that the means (8) for maintaining in longitudinal and lateral reference the second sheet blank (3) are formed by an upper chain (50) having articulated pads constituting a continuous contact surface with the upper face of said second sheet blank (3), said upper chain (50) having articulated pads being positioned facing the lower chain (40) having articulated pads and cooperating with the latter in order to displace said second blank (3) by adhesion.

16. Installation according to claim 14, characterized in that the upper chain (50) having articulated pads is longitudinally displaced in synchronization with the lower chain (40) having articulated pads.

17. Installation according to any one of the claims 1, 2, 11 or 13, characterized in that the means (60) for maintaining the edge to be welded of the first sheet blank (2) are formed by two guide paths (61, 62), which are lateral, parallel and positioned on either side of the horizontal displacement plane of the blanks (2, 3), each guide path (61, 62) cooperating on the one hand with a lateral surface (203a, 303a) of the pads (203, 303) of the chains (20, 30) and on the other with a vertical reference surface (64).

18. Installation according to any one of the claims 1, 5, 12 or 15, characterized in that the means (70) for laterally pressurizing the edges to be welded of the two sheet blanks (2, 3) are formed by two guide paths (71, 72) which are lateral, parallel and located on either side of the horizontal displacement plane of the blanks (2, 3), each guide path (71, 72) cooperating on the one hand with a lateral surface (403a, 503a) of the pads (403, 503) of the chains (40, 50) and on the other with at least one thrust member (74, 75) in a direction perpendicular to the joining plane of the blanks (2, 3).

19. Installation according to any one of the claims 1, 2 or 5, characterized in that the means (80) for longitudinally supporting the sheet blanks (2, 3) to be welded are formed by conveyor belts (13, 16) and the lower chains (20, 40) having articulated pads of the zone C of said installation.

20. Installation according to any one of the preceding claims, characterized in that the chains (20, 30, 40, 50) having articulated pads incorporate freely rotating support rollers (205, 305, 405, 505) cooperating with the face of the pads (203, 303, 403, 503) opposite to that in contact with the sheet blanks (2, 3), the rotation axis of said rollers being perpendicular to the displacement direction of said chains having articulated pads and horizontal.

21. Installation according to any one of the preceding claims, characterized in that the conveyor belts (10, 13, 14, 16) and chains (20, 30, 40, 50) with articulated pads move longitudinally in synchronization with one another.

22. Installation according to any one of the preceding claims, characterized in that the conveyor belts (10, 13) and chains (20, 30) having articulated pads cooperating with the first sheet blank (2) and conveyor belts (14, 16) and the chains (40, 50) with articulated pads cooperating with the second sheet blank (3) are located on either side of the joining plane of the blanks (2, 3).

## Patentansprüche

1. Anlage zum fortlaufenden Rand-an-Rand-Anlegen und Schweißen von wenigstens zwei Blechzuschnitten (2, 3) mit Hilfe eines Laserstrahls (1), mit:
A) einer Zone A zum Positionieren des ersten zu verschweißenden Blechzuschnittes (2), mit:
- einer Einrichtung zur Zufuhr dieses Blechzuschnittes (2) auf Mittel (4) zur Abstützung und Längspositionierung dieses Blechzuschnittes (2) auf einer waagerechten Referenzebene, die waagerecht in Richtung des Laserstrahls (1) verschiebbar sind,
- Mitteln (5) zum seitlichen Positionieren des zu schweißenden Randes dieses Blechzuschnittes (2) auf der Achse des Laserstrahls (1),
- Mitteln (6) zum Erhalten der Längs- und Querausrichtung dieses Blechzuschnittes (2), und
- Mitteln (60) zum Halten des zu schweißenden Randes dieses Blechzuschnittes (2) auf der Achse des Laserstrahls (1),
B) einer Zone B zum Rand-an-Rand-Anlegen der beiden zu schweißenden Blechzuschnitte (2, 3), mit:
- Mitteln (4a) zur Längsabstützung des ersten Blechzuschnittes (2) auf einer waagerechten Referenzebene,
- Mitteln (6) zum Erhalten der Längs- und Querausrichtung des ersten Blechzuschnittes (2),
- Mitteln (60) zum Halten des zu schweißenden Randes des ersten Blechzuschnittes auf der Achse des Laserstrahls (1),
- einer Einrichtung zur Zufuhr des zweiten Blechzuschnittes (3) auf Mittel (7) zur Längsabstützung des zweiten Blechzuschnittes (3) in der Referenzebene und zum Anlegen des zu schweißenden Randes des zweiten Blechzuschnittes (3) gegen den zu schweißenden Rand des ersten Blechzuschnittes (2), die synchron mit den Mitteln (6) zum Erhalten des Ausrichtung des ersten Blechzuschnittes (2) waagerecht beweglich sind, und
- Mitteln (8) zum Erhalten der Längs- und Querausrichtung des zweiten Blechzuschnittes (3),
C) einer Zone C zur Führung, zum Transport und zum Schweißen der beiden Blechzuschnitte (2, 3), mit:
- Mitteln (4a, 9) zur Längsabstützung der Blechzuschnitte (2, 3) auf einer waagerechten Referenzebene,
- waagerecht beweglichen Mitteln (6, 8) zum Erhalten der Längs-und Querausrichtung der beiden Blechzuschnitte (2, 3),
- Mitteln (60) zum Halten des zu schweißenden Randes des ersten Blechzuschnittes (2) auf der Achse des Laserstrahls (1),
- Mitteln (70) zur seitlichen Druckausübung auf die zu schweißenden Ränder der beiden Blechzuschnitte (2, 3), und
- einer Laserstrahl-Schweißausrüstung (1),
D) einer Austragzone D für die geschweißten Blechzuschnitte (2, 3) mit Mitteln (80) zur Längsabstützung der geschweißten Blechzuschnitte und Mitteln zum Abnehmen dieser geschweißten Blechzuschnitte.

2. Anlage nach Anspruch 1, dadurch gekennzeichnet, daß die Mittel (4) zur Abstützung und Längspositionierung des ersten Blechzuschnitts (2) gebildet werden durch einen Förderer (10), der mit der Unterseite des ersten Blechzuschnitts (2) eine erste kontinuierliche Berührungsfläche bildet und benachbart zu einer unteren Gelenkgliederkette (20) angeordnet ist, die eine zweite kontinuierliche Berührungsfläche mit der Unterseite des ersten Blechzuschnitts (2) bildet und sich synchron mit dem Förderer (10) in Längsrichtung bewegt.

3. Anlage nach Anspruch 2, dadurch gekennzeichnet, daß die Gelenkgliederkette (20) einen Teil des ersten Blechzuschnitts (2) unterstützt, der in der Nähe des zu schweißenden Randes liegt, und der Förderer (10) den anderen Teil des ersten Blechzuschnitts (2) unterstützt.

4. Anlage nach den Ansprüchen 1 und 2, dadurch gekennzeichnet, daß die Mittel (5) zum seitlichen Positionieren des zu schweißenden Randes des ersten Blechzuschnitts (2) durch einen längsverlaufenden Anschlag (12) gebildet werden, der eine Führung bildet und vertikal angeordnet ist, so daß die durch seine der unteren Gelenkgliederkette (20) zugewandte seitliche Oberfläche (12a) gehende Ebene mit der Achse des Laserstrahls (1) zusammenfällt.

5. Anlage nach Anspruch 1, dadurch gekennzeichnet, daß die Mittel (7) zur Abstützung und Längspositionierung des zweiten Blechzuschnitts (3) gebildet werden durch einen Förderer (14), der mit der Unterseite dieses Blechzuschnitts (3) eine erste kontinuierliche Berührungsfläche bildet und benachbart zu einer unteren Gelenkgliederkette (40) angeordnet ist, die eine zweite kontinuierliche Berührungsfläche mit der Unterseite des zweiten Blechzuschnitts (3) bildet und sich synchron mit dem Förderer (14) in Längsrichtung bewegt.

6. Anlage nach Anspruch 5, dadurch gekennzeichnet, daß die untere Gelenkgliederkette (40) einen Teil des zweiten Blechzuschnitts (3) unterstützt, der in der Nähe des zu schweißenden Randes liegt, und der Förderer (14) den anderen Teil dieses zweiten Blechzuschnitts (3) unterstützt.

7. Anlage nach den Ansprüchen 2 und 5, dadurch gekennzeichnet, daß die Förderer (10, 14) mit Mitteln zum geometrischen Positionieren jedes Blechzuschnitts (2, 3) versehen sind, die an die Form des betreffenden Blechzuschnitts angepaßt sind.

8. Anlage nach Anspruch 7, dadurch gekennzeichnet, daß die Mittel zum geometrischen Positionieren jedes Blechzuschnitts (2, 3) durch Anschläge (11, 15) in der Form von Leisten, Nasen oder Zapfen gebildet werden.

9. Anlage nach den Ansprüchen 2 und 5, dadurch gekennzeichnet, daß die Förderer (10) und (14) in bezug auf die Horizontale in Richtung auf die betreffende untere Gelenkgliederkette (20, 40) um einen Winkel α zwischen 1 und 5° geneigt sind, in Bewegungsrichtung der Blechzuschnitte (2, 3) abnehmend von diesem Winkel α auf 0°, wobei die Förderer (10, 14) waagerecht sind, bevor sie die Mittel (6, 8) zum Ausgerichtethalten der Blechzuschnitte (2, 3) erreichen.

10. Anlage nach den Ansprüchen 2 und 5, dadurch gekennzeichnet, daß die Förderer (10) und (14) Kugelförderer sind.

11. Anlage nach den Ansprüchen 1 und 2, dadurch gekennzeichnet, daß die Mittel (4a) zur Längsabstützung des ersten Blechzuschnitts (2) in der zweiten Zone B und der dritten Zone C der Anlage gebildet werden durch einen waagerechten Förderer (13), der mit der Unterseite des ersten Blechzuschnitts (2) eine erste kontinuierliche Berührungsfläche bildet und benachbart zu der unteren Gelenkgliederkette (20) der ersten Zone A angeordnet ist, die sich über die zweite Zone B und die dritte Zone C erstreckt und eine zweite kontinuierliche Berührungsfläche mit der Unterseite des ersten Blechzuschnitts (2) bildet.

12. Anlage nach den Ansprüchen 1 und 5, dadurch gekennzeichnet, daß Mittel (9) zur Längsabstützung des zweiten Blechzuschnitts (3) in der dritten Zone C der Anlage gebildet werden durch einen waagerechten Förderer (16), der mit der Unterseite des zweiten Blechzuschnitts (3) eine erste kontinuierliche Berührungsfläche bildet und benachbart zu der unteren Gelenkgliederkette (40) der zweiten Zone B angeordnet ist, die sich über die dritte Zone C erstreckt und eine zweite kontinuierliche Berührungsfläche mit der Unterseite des zweiten Blechzuschnitts (3) bildet.

13. Anlage nach den Ansprüchen 1 und 2, dadurch gekennzeichnet, daß die Mittel (6) zum Erhalten der Längs- und Querausrichtung des ersten Blechzuschnitts (2) gebildet werden durch eine obere Gelenkgliederkette (30), die eine kontinuierliche Berührungsfläche mit der Oberseite des ersten Blechzuschnitts (2) bildet und die gegenüberliegend zu der entsprechenden unteren Gelenkgliederkette (20) angeordnet ist und dazu bestimmt ist, mit dieser letzteren zusammenzuwirken, um den ersten Blechzuschnitt (2) kraftschlüssig zu transportieren.

14. Anlage nach Anspruch 13, dadurch gekennzeichnet, daß die obere Gelenkgliederkette (30) sich synchron mit der unteren Gelenkgliederkette (20) in Längsrichtung bewegt.

15. Anlage nach den Ansprüchen 1 und 5, dadurch gekennzeichnet, daß die Mittel (8) zum Erhalten der Längs- und Querausrichtung des zweiten Blechzuschnitts (3) gebildet werden durch eine obere Gelenkgliederkette (50), die eine kontinuierliche Berührungsfläche mit der Oberseite des zweiten Blechzuschnitts (3) bildet und die gegenüberliegend zu der entsprechenden unteren Gelenkgliederkette (40) angeordnet ist und dazu bestimmt ist, mit dieser letzteren zusammenzuwirken, um den zweiten Blechzuschnitt (3) kraftschlüssig zu transportieren.

16. Anlage nach Anspruch 14, dadurch gekennzeichnet, daß die obere Gelenkgliederkette (50) sich synchron mit der unteren Gelenkgliederkette (40) in Längsrichtung bewegt.

17. Anlage nach einem der Ansprüche 1, 2, 11 oder 13, dadurch gekennzeichnet, daß die Mittel (60) zum Halten des zu schweißenden Randes des ersten Blechzuschnitts (2) gebildet werden durch zwei parallele seitliche Führungswege (61, 62), die beiderseits der waagerechten Bewegungsebene der Blechzuschnitte (2, 3) angeordnet sind, wobei jeder Führungsweg (61, 62) einerseits mit einer seitlichen Oberfläche (203a, 303a) der Glieder (203, 303) der Gelenkgliederketten (20, 30) und andererseits mit einer vertikalen Bezugsfläche (64) zusammenwirkt.

18. Anlage nach einem der Ansprüche 1, 5, 12 oder 15, dadurch gekennzeichnet, daß die Mittel (70) zur seitlichen Druckausübung auf die zu schweißenden Ränder der beiden Blechzuschnitte (2, 3) gebildet werden durch zwei parallele seitliche Führungswege (71, 72), die beiderseits der waagerechten Bewegungsebene der Blechzuschnitte (2, 3) angeordnet sind, wobei jeder Führungsweg (71, 72) einerseits mit einer seitlichen Oberfläche (403a, 503a) der Glieder (403, 503) der Gelenkgliederketten (40, 50) und andererseits mit wenigstens einem Organ (74, 75) zur Druckausübung in einer zur Fügeebene der Blechzuschnitte (2, 3) senkrechten Richtung zusammenwirkt.

19. Anlage nach einem der Ansprüche 1, 2 oder 5, dadurch gekennzeichnet, daß die Mittel (80) zur Längsabstützung der zu schweißenden Blechzuschnitte (2, 3) gebildet werden durch die Förderer (13, 16) und die unteren Gelenkgliederketten (20, 40) der Zone C dieser Anlage.

20. Anlage nach einem der vorstehenden Ansprüche, dadurch gekennzeichnet, daß die Gelenkgliederketten (20, 30, 40, 50) frei drehbare Andruckrollen (205, 305, 405, 505) aufweisen, die dazu bestimmt sind, mit der Oberfläche der Glieder (203, 303, 403, 503) zusammenzuwirken, die der Berührungsfläche mit den Blechzuschnitten (2, 3) entgegengesetzt ist, wobei die Drehachse der Rollen waagerecht und senkrecht zur Bewegungsrichtung der Gelenkgliederketten verläuft.

21. Anlage nach einem der vorstehenden Ansprüche, dadurch gekennzeichnet, daß die Förderer (10, 13, 14, 16) und die Gelenkgliederketten (20, 30, 40, 50) sich synchron zueinander in Längsrichtung bewegen.

22. Anlage nach einem der vorstehenden Ansprüche, dadurch gekennzeichnet, daß die Förderer (10, 13) und die Gelenkgliederketten (20, 30), die mit dem ersten Blechzuschnitt (2) zusammenwirken, und die Förderer (14, 16) und die Gelenkgliederketten (40, 50), die mit dem zweiten Blechzuschnitt (3) zusammenwirken, beiderseits der Fügeebene der Blechzuschnitte (2, 3) angeordnet sind.
